(19) Europäisches Patentamt
European Patent Office
Office européen des brevets

(11) **EP 1 972 525 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(51) Int Cl.:
***B62D 7/08*** *(2006.01)*        ***B62D 7/20*** *(2006.01)*

(21) Anmeldenummer: **08003973.8**

(22) Anmeldetag: **04.03.2008**

(54) **Lenkgestänge eines Kraftfahrzeuges**

Automotive steering linkage

Barres de direction de véhicule automobile

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.03.2007 DE 102007012870**

(43) Veröffentlichungstag der Anmeldung:
**24.09.2008 Patentblatt 2008/39**

(73) Patentinhaber: **MAN Truck & Bus AG**
**80995 München (DE)**

(72) Erfinder:
• **Ille, Thomas**
**82223 Eichenau (DE)**
• **Negele, Klaus**
**85586 Poing (DE)**
• **Fleischhacker, Jan**
**80687 München (DE)**
• **Umling, Wilhelm**
**85764 Oberschleißheim (DE)**

(56) Entgegenhaltungen:
**DE-A1- 1 928 401     JP-A- 55 079 758**

**Beschreibung**

Technisches Gebiet:

Die Erfindung betrifft ein Lenkgestänge eines Kraftfahrzeuges mit einer Spurstange und mit jeweils einem rechten sowie einem linken an gegenüberliegenden Enden der Spurstange schwenkbar gelagerten Spurstangenhebeln; die in einer Ebene mit der Spurstange jeweils in Fahrtrichtung gesehen einen rechten und einen linken Spurhebelwinkel mit der Spurstange einschließen und die jeweils auf den der Spurstange abgewandten Enden schwenkbar mit den Achsschenkeln der Fahrzeugräder verbunden sind.

Stand der Technik:

Lenkgestänge werden in Fahrzeugen eingesetzt, um die Bewegungen des Lenkrades und damit den Wunsch des Fahrzeugführers nach einer Richtungsänderung auf die Fahrzeugräder umzusetzen. Die Aufgaben eines Lenkgestänges bestehen hierbei im Wesentlichen in der Weiterleitung der vom Lenkgetriebe erzeugten Lenkbewegungen an die Vorderräder, in der Kraftübertragung mit der gewünschten Übersetzung sowie in der Führung der Räder in einer bestimmten Spurstellung zueinander. Zu einem Lenkgestänge gehören eine ein- oder mehrteilige Spurstange, Spurstangengelenke, Spurstangenhebel, ggf. mit Zwischenhebeln, sowie eine Lenkstange.

Je nachdem, ob ein Fahrzeug über eine starre Vorderachse oder eine Einzelradaufhängung verfügt, kommen unterschiedliche Spurstangen zum Einsatz. Bei einer Starrachse können die Räder beim Durchfedern keine entgegengesetzten Federungswege ausführen. Das aus Spurstangenhebeln und Spurstange gebildete, so genannte Lenktrapez, das beim Durchfedern mitschwingt, bleibt unbeeinflusst. Daher werden bei starren Vorderachsen ein- oder zweiteilige Spurstangen verwendet, die die beiden Spurstangenhebel mit einander verbinden.

Bei Einzelradaufhängungen können die Fahrzeugräder hingegen unabhängig von einander durchfedern, so dass die Federungswege nicht nur verschieden groß, sondern auch einander entgegengesetzt sein können. Aus diesem Grund werden für Fahrzeuge mit Einzelradaufhängung in der Regel dreigeteilte Spurstangen verwendet. Bei Fahrzeugen mit Zahnstangenlenkung bietet sich auch der Einsatz zweiteiliger Spurstangen an. Auf diese Weise wird vor allem übermäßiger Reifenverschleiß vermieden und eine ausreichende Lenksicherheit gewährleistet.

Bei herkömmlichen Lenkgestängen entstehen beim Lenk - Volleinschlag hohe Kräfte in der Spurstange, da sich der resultierende Hebelarm $r_{res}$, nämlich der senkrechte Abstand zwischen der gedanklich verlängerten Spurstange und dem Anlenkpunkt der Spurstangenhebel am Achsschenkel, mit zunehmendem Lenkeinschlag erheblich reduziert. Aufgrund der Spannungen, die durch die in der Spurstange wirkenden Kräfte verursacht werden, wird die Spurstange vor allem wegen Ihrer elastischen, häufig gekröpften Bauweise gestreckt oder gestaucht. Durchfährt ein Fahrzeug, dessen linkes Rad bspw. direkt angelenkt ist, eine Rechtskurve wird die Spurstange "gezogen" und somit aufgrund der auftretenden Zugkräfte gestreckt. Diese Streckung bewirkt, dass das rechte Rad in diesem Fall weniger weit eingeschlagen wird als konstruktiv vorgesehen. Bei Linkskurven entsteht ebenfalls ein zu geringer Lenkwinkel aufgrund der Stauchung der Spurstange.

Durch die erwähnte Elastizität der Spurstange ist somit in jedem Fall der Lenkwinkel am nicht direkt angelenkten Rad, also dem Rad, dessen Einschlag durch die Spurstange bewirkt wird, kleiner als der theoretisch vorgesehene Lenkwinkel.

Die der Erfindung zugrunde liegende Aufgabe besteht darin, ein Lenkgestänge derart weiterzubilden, dass die aufgrund der Elastizität einer Spurstange auftretenden Differenzen zwischen einem theoretisch vorgesehenen Lenkeinschlag und dem realen Lenkeinschlag der Fahrzeugräder zuverlässig kompensiert werden. Das anzugebende Lenkgestänge soll sich hierbei durch einen einfachen Aufbau auszeichnen und ohne Zuhilfenahme zusätzlicher Regelungssysteme zu realisieren sein.

Aus der JP 55 079758 A ist ferner eine gattungsgemäße Lenkvorrichtung bekannt, die eine Achse, zwei Spurstangenhebel, zwei Spurstangen und einen Schwenkarm aufweist. Der Schwenkarm verbindet dabei die Achse mit beiden Spurstangen und ist dazu vorgesehen unerwünschte Lenkeigenschaften zu kompensieren. Die beschriebene Vorrichtung ist jedoch im Hinblick auf das Gewicht, die Herstellungskosten und die Komplexität verbesserungsfähig.

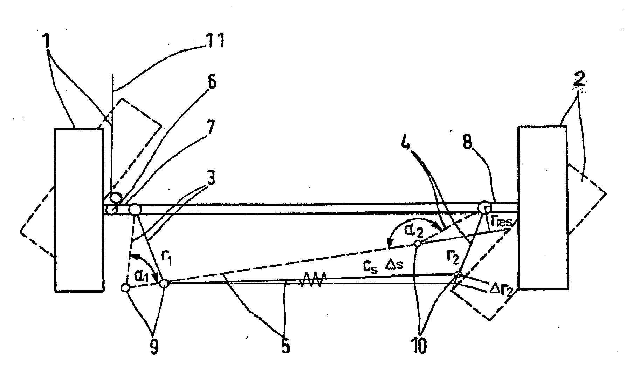

Die zuvor geschilderte Aufgabe wird mit Hilfe eines Kraftfahrzeuglenkgestänges gemäß Anspruch 1 gelöst. Vorteilhafte Ausführungsformen der Erfindung sind Gegenstand der Unteransprüche und werden in der Beschreibung unter Bezugnahme auf die Figur näher erläutert.

Erfindungsgemäß wird ein Lenkgestänge eines Kraftfahrzeuges mit einer Spurstange und mit jeweils einem rechten sowie einem linken an gegenüberliegenden Enden der Spurstange schwenkbar gelagerten Spurstangenhebel, die in einer Ebene mit der Spurstange jeweils in Fahrtrichtung gesehen einen rechten und einen linken Spurstangenhebelwinkei mit der einstückigen Spurstange einschließen und die jeweils auf den der Spurstange abgewandten Enden schwenkbar mit den Achsschenkeln der Fahrzeugräder verbunden sind, derart weiter gebildet, dass bei Geradeausstellung der Fahrzeugräder der rechte Spurstangenhebelwinkel einen vom linken Spurstangenhebelwinkel verschiedenen Wert aufweist.

Die zuvor geschilderte Differenz zwischen dem rechten und linken Spurstangenhebelwinkel wird vorzugsweise durch die Verkürzung der Länge eines der Spurstangenhebel erreicht. Die Werte für die Länge der beiden Spurstangenhebel werden somit derart gewählt, dass die Längendifferenz die Streckung oder Stauchung der Spurstange bei einem Lenkeinschlag kompensiert. Auf diese Weise bildet das Lenkgestänge bei Geradeausstellung der Fahrzeugräder ein asymmetrisches Lenktrapez.

In einer speziellen Ausführungsform der Erfindung wird der rechte Spurstangenhebelwinkel bei einem Fahrzeug, dessen Lenkrad sich in Fahrtrichtung auf der linken Fahrzeugseite befindet, also bei einem so genannten Linkslenker, größer als der linke Spurstangenhebelwinkel gewählt. Dies wird vornehmlich dadurch erreicht, dass der rechte Spurstangenhebel kürzer als der Spurstangenhebel auf der linken Seite ausgeführt wird.

Handelt es sich bei dem mit dem erfindungsgemäß ausgebildeten Lenkgestänge ausgerüsteten Fahrzeug dagegen um einen so genannten Rechtslenker, also um ein Fahrzeug, bei dem das Lenkrad auf der in Fahrtrichtung gesehen rechten Seite angeordnet ist, so wird der linke Spurstangenhebelwinkel größer als der rechte Spurstangenhebel bei Geradeausstellung der Räder ausgelegt.

Die unterschiedliche Dimensionierung der Spurstangenhebelwinkel wird vorzugsweise dadurch erreicht, das jeweils einer der beiden Spurstangenhebel kürzer als der andere ausgebildet ist. Die auf diese Weise entstehende Spurstangenhebellängendifferenz stellt bei geradeaus Stellung der Fahrzeugräder sicher, dass das aus Spurstangenhebeln sowie Spurstange gebildete Lenktrapez asymmetrisch ist. Eine ganz besondere Weiterbildung der Erfindung sieht vor, dass die Spurstangenhebellängendifferenz $\Delta r_2$ mit den Werten

$r_1$:   Länge des linken Spurhebels [m];

$\Delta s$:   Streckung der Spurstange [m];

$\alpha_{2,max}$:   rechter Spurhebelwinkel bei maximalem Einschlag der Fahrzeugräder nach rechts;

$F_{\alpha 2,max}$:   in der Spurstange bei maximalem Einschlag der Fahrzeugräder wirkende Kraft sowie

$c_s$:   Steifigkeit der Spurstange [N/m]

K:   Korrekturfaktor zur zusätzlichen Kompensation von Hebelelastizitäten bzw. zur Über- oder Unterkompensation der Spurstangenelastizität

nach der Formel

$$\Delta r_2 = r_1 - \sqrt{r_1^2 + \Delta s^2 - 2 \cdot r_1 \cdot \Delta s \cdot \cos(180° - \alpha_{2,max})} + K,$$

wobei gilt,

$$\Delta s = \frac{F_{\alpha 2,max}}{c_s}.$$

berechnet wird.

Im Zusammenhang mit der erfindungsgemäßen Ausführung eines Lenkgestänges sieht eine vorteilhafte Weiterbildung vor, dass im Bereich der Spurstangengelenke oder den Enden der Spurstangenhebel wenigstens eine Kröpfung vorgesehen ist.

In Abhängigkeit der Ausführung der Achse bzw. der Radaufhängung ist es denkbar, die erfindungsgemäße Gestaltung eines Lenkgestänges mit einer einstückigen oder mit einer geteilten oder sogar mehrteiligen Spurstange zu realisieren. Wesentlich ist jeweils, dass das von der Spurstange und den Spurstangenhebeln gebildete Lenktrapez bei Geradeausstellung der Fahrzeugräder asymmetrisch ist, also eine Differenz zwischen dem Spurhebelwinkel auf der rechten Seite und dem auf der linken Seite besteht.

Unter anderem ist die zuvor geschilderte Erfindung für Fahrzeuge mit Einzelradaufhängung geeignet. Ein spezielles Einsatzgebiet stellt in diesem Zusammenhang der Einsatz in Nutzfahrzeugen, insbesondere in Lastkraftwagen oder Omnibusse mit einem zulässigen Gesamtgewicht von mindestens 7.500 kg dar.

Im Folgenden wird die Erfindung ohne Beschränkung des allgemeinen Erfindungsgedankens anhand einer Figur näher erläutert. Es zeigt:

Figur:   schematische Darstellung des Lenkgestänges eines Kraftfahrzeugs mit asymmetrischem Lenktrapez.

Die Figur zeigt in einer Schemadarstellung die Draufsicht auf eine Einzelradaufhängung eines Nutzfahrzeugs. Hierbei ist die Stellung eines erfindungsgemäß ausgeführten Lenkgestänges bei Geradeausstellung der Fahrzeugräder 1, 2 einer Stellung des Lenkgestänges gegenübergestellt, die sich ergibt, sobald die Fahrzeugräder für das Durchfahren einer Rechtskurve eingelenkt sind. Hierbei zeigen die durchgezogenen Linien die Stellung der Fahrzeugräder 1, 2 und des Lenkgestänges 3, 4, 5 bei Geradeausstellung, während die gestrichelten Linien deren Stellung bei einem Rechtseinschlag der Lenkung abbilden.

Das zwischen den beiden Fahrzeugrädern 1, 2 angeordnete Lenkgestänge verfügt im wesentlichen über zwei Spurstangenhebel 3, 4, wobei der linke Spurstangenhebel 3 am Achsschenkel 7 des linken Fahrzeugrades 1 und der rechte Spurstangenhebel 4 am Achsschenkel 8 des rechten Fahrzeugrades 2 angelenkt ist. Gegenüber den Anlenkpunkten an den jeweiligen Achsschenkeln 7, 8 sind die Spurstangenhebel 3, 4 jeweils über Spurstangengelenke 9, 10 mit der Spurstange 5 verbunden. Die Spurstangenhebel 3,4 sowie die Spurstange 5 sind in einer Ebene angeordnet, in der sie schwenkbar gelagert sind. Die Spurstange 5 und die Spurstangenhebel 3, 4 bilden auf diese Weise das so genannte Lenktrapez.

Am Achsschenkel 7 bzw. dem Radträger des linken Fahrzeugrades 1 ist ferner der Lenkstockhebel 6 befestigt, der die Verbindung zur Lenkstange oder dem Lenkgetriebe darstellt (Lenkstange und Lenkgetriebe nicht abgebildet). Auf diese Weise ist das linke Fahrzeugrad 1 direkt mit der Fahrzeuglenkung verbunden. Schlägt der Fahrzeugführer nunmehr die Fahrzeuglenkung nach rechts ein, um eine Rechtskurve zu durchfahren, so wird das linke Rad 1 durch die Bewegung des Lenkstockhebels 6 nach rechts eingeschlagen und das rechte Rad 2 mit Hilfe der gelenkigen Verbindung, die aus den beiden Spurstangenhebeln 3, 4 und der Spurstange 5 gebildet wird, entsprechend nachgeführt. Bei herkömmlich gestalteten Lenkgestängen mit gleich langen Spurstangenhebeln führt dies dazu, dass das rechte Rad aufgrund der Streckung der "gezogenen" Spurstange weniger eingeschlagen wird als konstruktiv vorgesehen.

Um das zuvor geschilderte Problem auszuschließen, sind bei dem in der Figur dargestellten Ausführungsbeispiel die Spurstangenhebel 3, 4 derart ausgeführt, dass der rechte Spurstangenhebel 4 um die Spurstangenhebellängendifferenz $\Delta r_2$ kürzer als der linke Spurstangenhebel 3 ist. Dies führt dazu, dass bei Geradeausstellung der Fahrzeugräder 1, 2 die Spurstange 5 nicht senkrecht zu den Fahrzeugrädern angeordnet ist, sondern, wie abgebildet, leicht schräg zur Laufrichtung der Fahrzeugräder 1, 2 verläuft. Werden nunmehr aufgrund eines Einschlags des Lenkrades durch den Fahrzeugführer die Fahrzeugräder 1, 2 nach links oder rechts eingeschlagen, so bewirkt die Spurstangenhebellängendifferenz $\Delta r_2$ zwischen den Spurstangenhebeln 3, 4, dass die Längenänderung der Spurstange 5 aufgrund der auftretenden Streckung oder Stauchung der Spurstange 5 kompensiert wird.

Die dargestellte erfindungsgemäße Ausführung eines Lenkgestänges, insbesondere die unterschiedlichen Dimensionierung der Länge der Spurstangenhebel 3, 4 gewährleistet eine Verbesserung des Fahrverhaltens sowie eine Verbesserung der Lenkpräzision und der Spurhaltung. Darüber hinaus führt die vorgeschlagene Verbesserung zu einer Reduzierung des Reifenverschleißes, da das so genannte "Radieren" der Räder aufgrund des ungleichmäßigen Lenkeinschlages verhindert wird. Nicht zuletzt kann die erfindungsgemäß vorgeschlagene technische Lösung den Bremsversatz bei entsprechender Abstimmung des Lenkgestänges positiv beeinflussen.

**Bezugszeichenliste**

| | |
|---|---|
| 1 | linkes Fahrzeugrad |
| 2 | rechtes Fahrzeugrad |
| 3 | linker Spurstangenhebel |
| 4 | rechter Spurstangenhebel |
| 5 | Spurstange |
| 6 | Lenkstockhebel |
| 7 | linker Achsschenkel |
| 8 | rechter Achsschenkel |
| 9 | linkes Spurstangengelenk |
| 10 | rechtes Spurstangengelenk |
| 11 | Lenkschubstange |

**Patentansprüche**

1. Lenkgestänge eines Kraftfahrzeugs mit einer Spurstange (5) und mit jeweils einem rechten (4) sowie einem linken (3) an gegenüber liegenden Enden der Spurstange (5) schwenkbar gelagerten Spurstangenhebeln (3, 4), die in einer Ebene mit der Spurstange (5) jeweils in Fahrtrichtung gesehen einen rechten und einen linken Spurstangen-

hebelwinkel ($\alpha_1$, $\alpha_2$) mit der Spurstange (5) einschließen und die jeweils auf den der Spurstange (5) abgewandten Enden schwenkbar mit den Achsschenkeln (7, 8) der Fahrzeugräder (1, 2) verbunden sind, **dadurch gekennzeichnet, dass** bei Geradeausstellung der Fahrzeugräder (1, 2) der rechte Spurstangenhebelwinkel ($\alpha_2$) einen vom linken Spurstangenhebelwinkel ($\alpha_1$) verschiedenen Wert aufweist, wobei beide Spurstangenhebel (3, 4) jeweils über Spurstangengelenke (9, 10) mit der einstückigen Spurstange (5) verbunden sind und zur Kompensation von Langenänderungen der Spurstange (5) aufgrund von Streckung oder Stauchung, eine Spurstangenhebeliängendifferenz ($\Delta r_2$) aufweisen.

2. Lenkgestänge nach Anspruch 1, **dadurch gekennzeichnet, dass** der rechte Spurstangenhebelwinkel ($\alpha_2$) bei einem Fahrzeug, dessen Lenkrad sich auf der linken Fahrzeugseite befindet, also bei einem so genannten Linkslenker, größer als der linke Spurstangenhebelwinkel ($\alpha$1) ist.

3. Lenkgestänge nach Anspruch 1, **dadurch gekennzeichnet, dass** der linke Spurstangenhebelwinkel ($\alpha$1) bei einem Fahrzeug, dessen Lenkrad sich auf der rechten Fahrzeugseite befindet, also bei einem so genannten Rechtslenker grö-ßer, als der rechte Spurstangenhebelwinkel ($\alpha_2$) ist.

4. Lenkgestänge nach einem der Ansprüche 1 bis 3, **dadurch gekennzeichnet, dass** sich eine Länge des rechten Spurstangenhebels (4) um eine Spurstangenhebellängendifferenz ($\Delta r_2$) von einer Länge des linken Spurstangenhebels (3) unterscheidet, wobei sich die Länge des rechten (4) und des linken (3) Spurstangenhebels jeweils zwischen den beidseitig des Spurstangenhebels (3, 4) angeordneten Gelenkpunkten erstreckt.

5. Lenkgestänge nach einem der Ansprüche 1 bis 4, **dadurch gekennzeichnet, dass** sich die Spurstangenhebellängendifferenz $\Delta r_2$ mit den Werten:

$r_1$: Länge des linken Spurstangenhebels [m];
$\Delta s$: Streckung der Spurstange [m];
$\alpha_{2,max}$: rechter Spurstangenhebelwinkel bei maximalem Einschlag der Fahrzeugräder nach rechts;
$F\alpha_{2.max}$: in der Spurstange bei maximalem Einschlag der Fahrzeugräder wirkende Kraft sowie
$C_s$: Steifigkeit der Spurstange [N/m]
K: Korrekturfaktor zur zusätzlichen Kompensation von Hebelelastizitäten bzw. zur Über- oder Unterkompensation der Spurstangenelastizität

wie folgt berechnet:

$$\Delta r_2 = r_1 - \sqrt{r_1^2 + \Delta s^2 - 2 \cdot r_1 \cdot \Delta s \cdot \cos(180° - \alpha_{2,max})} + K ,$$

wobei gilt,

$$\Delta s = \frac{F_{\alpha_{2.max}}}{c_s} .$$

6. Lenkgestänge nach einem der Ansprüche 1 bis 5, **dadurch gekennzeichnet, dass** die Spurstange (5) wenigsten eine Kröpfung aufweist.

7. Lenkgestänge nach einem der Ansprüche 1 bis 6, **dadurch gekennzeichnet, dass** die Spurstange (5) wenigstens zwei in Wirkverbindung stehende Spurstangenelemente aufweist.

**8.** Verwendung des Lenkgestänges nach einem der Ansprüche 1 bis 7 in einem Kraftfahrzeug mit Einzelradaufhängung an der gelenkten Achse.

**9.** Verwendung des Lenkgestänges nach einem der Ansprüche 1 bis 7 in einem Kraftfahrzeug mit einer gelenkten Starrachse.

**10.** Verwendung des Lenkgestänges nach einem der Ansprüche 1 bis 9,
**dadurch gekennzeichnet, dass** das Kraftfahrzeug ein Nutzfahrzeug, insbesondere ein Lastkraftwagen oder Omnibus, mit einem zulässigen Gesamtgewicht von mindestens 7500 kg ist.

**Claims**

**1.** An automotive steering linkage having a steering tie rod (5) and having in each case a right-hand steering tie rod lever (4) and a left-hand steering tie rod lever (3) pivotably mounted at opposite ends of the steering tie rod (5), which steering tie rod levers (3, 4) enclose, viewed in a plane with the steering tie rod (5), a right-hand steering tie rod lever angle ($\alpha_2$) and a left-hand steering tie rod lever angle ($\alpha_1$) with the steering tie rod (5), viewed in each case in the direction of travel, and which are each connected at the ends facing away from the steering tie rod (5) to the axle stubs (7, 8) of the vehicle wheels (1, 2) in a pivotable fashion,
**characterized in that** in the case of straight-ahead positioning of the vehicle wheels (1, 2) the right-hand steering tie rod lever angle ($\alpha_2$) has a value which is different from the left-hand steering tie rod lever angle ($\alpha_1$), wherein the two steering tie rod levers (3, 4) are each connected to the one-piece steering tie rod (5) via steering tie rod joints (9, 10) and have a difference ($\Delta r_2$) in length of the steering tie rod levers in order to compensate changes in length of the steering tie rod (5) owing to extension or compression.

**2.** The steering linkage according to Claim 1,
**characterized in that** in the case of a vehicle whose steering wheel is located on the left-hand side of the vehicle, that is to say in the case of what is referred to as left-hand drive, the right-hand steering tie rod lever angle ($\alpha_2$) is greater than the left-hand steering tie rod lever angle ($\alpha_1$).

**3.** The steering linkage according to Claim 1,
**characterized in that** in the case of a vehicle whose steering wheel is located on the right-hand side of the vehicle, that is to say in the case of what is referred to as right-hand drive, the left-hand steering tie rod lever angle ($\alpha_1$) is greater than the right-hand steering tie rod lever angle ($\alpha_2$).

**4.** The steering linkage according to one of Claims 1 to 3,
**characterized in that** a length of the right-hand steering tie rod lever (4) differs from a length of the left-hand steering tie rod lever (3) by a difference ($\Delta r_2$) in length of the steering tie rod levers, wherein the length of the right-hand steering tie rod lever (4) and of the left-hand steering tie rod lever (3) extends in each case between the articulation points arranged on each side of the steering tie rod lever (3, 4).

**5.** The steering linkage according to one of Claims 1 to 4,
**characterized in that** the difference $\Delta r_2$ in length of the steering tie rod levers having the values:

$r_1$: length of the left-hand steering tie rod lever [m];
$\Delta s$: extension of the steering tie rod [m];
$\alpha_{2,max}$: right-hand steering tie rod lever angle in the case of maximum deflection of the vehicle wheels to the right;
$F_{\alpha2,max}$ : force acting in the steering tie rod in the case of maximum deflection of the vehicle wheels;
$C_s$: rigidity of the steering tie rod [N/m], and
K: correction factor for the additional compensation of lever elasticities or for the overcompensation or undercompensation of the steering tie rod elasticity

is calculated as follows:

$$\Delta r_2 = r_1 - \sqrt{r_1^2 + \Delta s^2 - 2 \cdot r_1 \cdot \Delta s \cdot \cos(180° - \alpha_{2,max})} + K,$$

where the following applies:

$$\Delta s = \frac{F_{\alpha_2, max}}{c_{_B}}.$$

6.  The steering linkage according to one of Claims 1 to 5,
    **characterized in that** the steering tie rod (5) has at least one bend.

7.  The steering linkage according to one of Claims 1 to 6,
    **characterized in that** the steering tie rod (5) has at least two steering tie rod elements which are operatively connected.

8.  The use of the steering linkage according to one of Claims 1 to 7 in a motor vehicle with individual wheel suspension on the steered axle.

9.  The use of the steering linkage according to one of Claims 1 to 7 in a motor vehicle having a steered rigid axle.

10. The use of the steering linkage according to one of Claims 1 to 9,
    **characterized in that** the motor vehicle is a utility vehicle, in particular a lorry or bus, having a permissible total weight of at least 7500 kg.

**Revendications**

1.  Tringlerie de direction d'un véhicule automobile comprenant une barre de direction (5) et avec à chaque fois un levier de barre de direction droit (4) et un levier de barre de direction gauche (3) montés pivotants à des extrémités opposées de la barre de direction (5), lesquels forment dans un plan avec la barre de direction (5), à chaque fois vu dans la direction de conduite, un angle de levier de barre de direction droit et un angle de levier de barre de direction gauche ($\alpha_1$, $\alpha_2$) avec la barre de direction (5) et lesquels sont à chaque fois connectés aux extrémités opposées à la barre de direction (5) de manière pivotante aux fusées d'essieu (7, 8) des roues de véhicule (1, 2), **caractérisée en ce que** dans la position rectiligne des roues de véhicule (1, 2), l'angle de levier de barre de direction droit ($\alpha_2$) présente une valeur différente de l'angle de levier de barre de direction gauche ($\alpha_1$), les deux leviers de barre de direction (3, 4) étant connectés à chaque fois par le biais d'articulations de barre de direction (9, 10) à la barre de direction d'une seule pièce (5) et présentant, pour compenser les variations de longueur de la barre de direction (5) du fait de l'allongement ou de la compression, une différence de longueur de levier de barre de direction ($\Delta r_2$).

2.  Tringlerie de direction selon la revendication 1,
    **caractérisée en ce que** l'angle de levier de barre de direction droit ($\alpha_2$), dans le cas d'un véhicule dont le volant de direction se trouve du côté gauche du véhicule, c'est-à-dire pour un volant dit à gauche, est supérieur à l'angle de levier de barre de direction gauche ($\alpha_1$).

3.  Tringlerie de direction selon la revendication 1,
    **caractérisée en ce que** l'angle de levier de barre de direction gauche ($\alpha_1$), dans le cas d'un véhicule dont le volant de direction se trouve du côté droit du véhicule, c'est-à-dire pour un volant dit à droite, est supérieur à l'angle de levier de barre de direction droit ($\alpha_2$).

4.  Tringlerie de direction selon l'une quelconque des revendications 1 à 3,
    **caractérisée en ce qu'**une longueur du levier de barre de direction droit (4) est différente, de la mesure d'une différence de longueur de levier de barre de direction ($\Delta r_2$), d'une longueur du levier de barre de direction gauche (3), la longueur du levier de barre de direction droit (4) et du levier de barre de direction gauche (3) s'étendant à chaque fois entre les points d'articulation disposés de chaque côté du levier de barre de direction (3, 4).

5.  Tringlerie de direction selon l'une quelconque des revendications 1 à 4,
    **caractérisée en ce que** la différence de longueur de levier de barre de direction ($\Delta r_2$) est calculée, avec les valeurs suivantes :

$r_1$: longueur du levier de barre de direction gauche [m] ;

$\Delta s$: allongement de la barre de direction [m] ;

$\alpha_{2,max}$: angle de levier de barre de direction droit pour un braquage maximal des roues du véhicule vers la droite ;

$F_{\alpha2.max}$: force agissant dans la barre de direction pour un braquage maximal des roues du véhicule et

$C_s$: rigidité de la barre de direction [N/m]

K: facteur de correction pour la compensation supplémentaire des élasticités de levier ou pour la surcompensation ou la sous-compensation de l'élasticité de la barre de direction,

de la manière suivante :

$$\Delta r_2 = r_1 - \sqrt{r_1^2 + \Delta s^2 - 2 \cdot r_1 \cdot \Delta s \cdot \cos(180° - \alpha_{2,max})} + K,$$

où

$$\Delta s = \frac{F_{\alpha_{2,max}}}{c_s}.$$

6. Tringlerie de direction selon l'une quelconque des revendications 1 à 5, **caractérisée en ce que** la barre de direction (5) présente au moins un coude.

7. Tringlerie de direction selon l'une quelconque des revendications 1 à 6, **caractérisée en ce que** la barre de direction (5) présente au moins deux éléments de barre de direction en liaison fonctionnelle.

8. Utilisation de la tringlerie de direction selon l'une quelconque des revendications 1 à 7 dans un véhicule automobile avec une suspension de roue individuelle au niveau de l'essieu directeur.

9. Utilisation de la tringlerie de direction selon l'une quelconque des revendications 1 à 7 dans un véhicule automobile comprenant un essieu rigide directeur.

10. Utilisation de la tringlerie de direction selon l'une quelconque des revendications 1 à 9, **caractérisée en ce que** le véhicule automobile est un véhicule utilitaire, notamment un véhicule poids lourd ou un omnibus, comprenant un poids total admissible d'au moins 7500 kg.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 55079758 A